# EUROPEAN PATENT APPLICATION

(11) **EP 4 836 070 A1**
(43) Date of publication of application: **04.11.2026**
(21) Application number: 24910700.4
(22) Date of filing: 10.12.2024
(51) Int. Cl.: H01M 10/42, H01M 10/056, H01M 10/0525

(54) **RECYCLABLE SULFIDE COMPOSITE SOLID ELECTROLYTE AND PREPARATION METHOD THEREFOR**

(30) Priority: 26.12.2023 CN 202311799876
(71) Applicant: Hytzer New Energy (Changzhou) Co., Ltd, Changzhou, Jiangsu 213164 (CN)
(72) Inventor: ZHOU, Xinhong, hangzhou, Jiangsu 213164 (CN); HAO, Jiangang, hangzhou, Jiangsu 213164 (CN); DOU, Xi, hangzhou, Jiangsu 213164 (CN); ZHONG, Ying, hangzhou, Jiangsu 213164 (CN)
(74) Representative: Predazzi, Valentina
(86) International application number: PCT/CN2024/138180
(87) International publication number: WO 2025/139769

(57) **Abstract**

Provided in the present disclosure are a recyclable sulfide composite solid electrolyte and a preparation method therefor. The recyclable sulfide composite solid electrolyte comprises: a polymer having a dynamic reversible covalent bond, the polymer integrating the dynamic reversible covalent bond on a main chain or a cross-linked side chain; and a sulfide solid electrolyte.

## Description

### CROSS-REFERENCE TO RELATED APPLICATION

This application is based upon and claims priority to Chinese Patent Application No. 202311799876.2, filed December 26, 2023, the entire contents of which are incorporated herein by reference.

### FIELD

The present disclosure relates to a solid electrolyte, and more particularly to a recyclable sulfide composite solid electrolyte and a preparation method thereof, a recyclable sulfide composite solid electrolyte membrane, and a solid lithium-ion battery including the recyclable sulfide composite solid electrolyte membrane.

### BACKGROUND

Sulfide solid batteries exhibit good chemical stability, a wide applicable temperature range, and good electrical conductivity. To achieve industrialization of sulfide solid batteries, large-scale film formation of a sulfide solid electrolyte first needs to be realized. However, a film-forming property of the sulfide solid electrolyte itself is poor, and a polymer binder is needed to assist film formation. Currently, an optimal solution is to provide an organic/inorganic sulfide composite electrolyte membrane.

In addition, in consideration of costs and environmental pressures, the recycling of batteries can greatly reduce carbon emissions throughout the entire lifecycle, which is also an effective measure for controlling carbon emissions in the lithium battery industry chain. Therefore, the recycling of batteries has attracted increasing attention. However, at present, the field of recycling technology for sulfide solid batteries remains unexplored. Therefore, it is of great significance to develop a recyclable sulfide solid electrolyte membrane.

### SUMMARY

In view of the deficiencies of the related art, some objects of the present disclosure are intended to provide a recyclable sulfide composite solid electrolyte and a preparation method thereof. The obtained sulfide composite electrolyte can be recycled, has a self-healing capability, and has a prolonged service life.

Other objects of the present disclosure are intended to provide a recyclable sulfide composite solid electrolyte membrane and a solid lithium-ion battery including the recyclable sulfide composite solid electrolyte membrane.

In a first aspect, a recyclable sulfide composite solid electrolyte is provided in the present disclosure. The recyclable sulfide composite solid electrolyte includes a polymer having dynamic reversible covalent bonds, in which the polymer has the dynamic reversible covalent bonds integrated into a main chain or crosslinking branches, and a sulfide solid electrolyte.

In some embodiments, the main chain of the polymer having the dynamic reversible covalent bonds is a flexible chain. For example, the main chain of the polymer having the dynamic reversible covalent bonds is one or more selected from natural rubbers, synthetic rubbers, polyurethanes, polyacrylates, polyphosphazenes, polyethylene oxide, epoxy resins, polyolefins, polydimethylsilane, or polycarbonates.

In some embodiments, the polymer includes one or more functional groups capable of repeatedly bonding/debonding under light or heat induction, for example, anthracene, cinnamate, coumarin, a combination of aldehydes and amines, or a combination of furans and maleimides.

Optionally, bonding and debonding reactions of the dynamic reversible covalent bonds include at least one of:
i) bonding and debonding reactions between coumarin molecules: 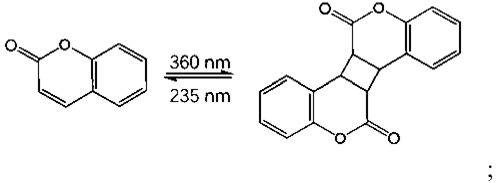
ii) bonding and debonding reactions between substituted or unsubstituted anthracene molecules: 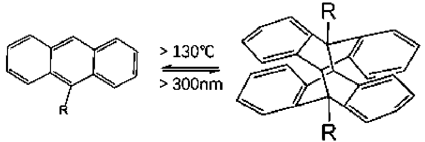 in which R is selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine; optionally, R is selected from hydrogen, methyl, ethyl, n-propyl, or n-butyl;
iii) bonding and debonding reactions between substituted or unsubstituted furans and substituted or unsubstituted maleimides: 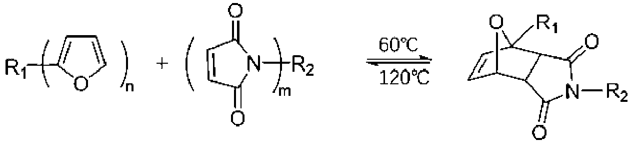
   in which R₁ and R₂ are each independently selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms; in which the haloalkyl group contains at least one halogen atom, such as fluorine, chlorine, bromine, or iodine; optionally, R₁ and R₂ are each independently selected from hydrogen, methyl, ethyl, n-propyl, or n-butyl;
   each of n and m is an integer greater than or equal to 1, for example, each of n and m is an integer in the range of 1 to 1000, for example, each of n and m is an integer in the range of 10 to 500;
iv) bonding and debonding reactions between aldehydes and amines: 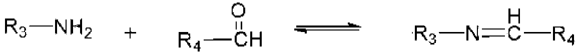 in which R₃ and R₄ are each independently selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine; a cycloalkyl group; an aryl group; or a heteroaryl group; optionally, R₃ and R₄ are each independently selected from hydrogen, methyl, ethyl, n-propyl, or n-butyl;
v) bonding and debonding reactions between substituted or unsubstituted cinnamate molecules: 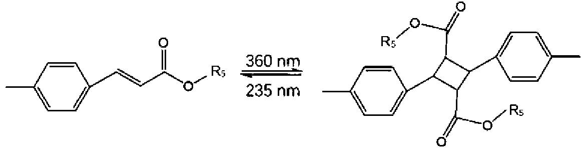 in which R₅ is selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine; optionally, R₅ is selected from hydrogen, methyl, ethyl, n-propyl, or n-butyl.

In some embodiments, the sulfide solid electrolyte is one or more selected from Li₂S-P₂S₅, Li₂S-P₂S₅-MSₓ, Li_{3.4}Si_{0.4}P_{0.6}S₄, Li₁₀GeP₂S_{11.7}O_{0.3}, Li_{9.6}P₃S₁₂, Li₇P₃S₁₁, Li₉P₃S₉O₃, Li_{10.35}Si_{1.35}P_{1.65}S₁₂, Li_{9.81}Sn_{0.81}P_{2.19}S₁₂, Li₁₀GeP₂S₁₂, Li₆PS₅X, Li₇P₂S₈I, Li_{10.35}Ge_{1.35}P_{1.65}S₁₂, Li_{3.25}Ge_{0.25}P_{0.75}S₄, Li₁₀SnP₂S₁₂, Li₁₀SiP₂S₁₂, or Li_{9.54}Si_{1.74}P_{1.44}S_{11.7}Cl_{0.3}; in which M includes one or a combination of two or more selected from Si, Ge, or Sn, and X is one or more selected from Cl, Br, or I; where 0≤x≤2.

In some embodiments, the recyclable sulfide composite solid electrolyte further includes a lithium salt. For example, the lithium salt is one or more selected from lithium perchlorate (LiClO₄), lithium tetrafluoroborate (LiBF₄), lithium hexafluoroarsenate (LiAsF₆), lithium hexafluorophosphate (LiPF₆), lithium bis(oxalato)borate (LiBOB), lithium difluoro(oxalato)borate (LiDFOB), lithium bis(fluorosulfonyl)imide (LiFSI), or lithium bis(trifluoromethanesulfonyl)imide (LiTFSI). A mass percentage of the polymer is 0.2% to 40%, a mass percentage of the sulfide solid electrolyte is 20% to 99.6%, and a mass percentage of the lithium salt is 0.2% to 40%, based on a total mass of the recyclable sulfide composite solid electrolyte.

In a second aspect, the present disclosure provides a method for preparing a recyclable sulfide composite solid electrolyte according to the embodiments of the first aspect of the present disclosure. The method includes mixing a sulfide solid electrolyte and a polymer having dynamic reversible covalent bonds by a slurry process or a dry process to obtain a polymer/sulfide mixture, and applying a light or heat induction condition to the polymer/sulfide mixture to obtain the recyclable sulfide composite solid electrolyte.

In some embodiments, the method further includes adding a lithium salt. The lithium salt is mixed with the polymer/sulfide mixture by at least one of screw extrusion, agitation, gas stirring, ball milling, internal mixing, or kneading (or referred to as compounding).

In some embodiments, the light or heat induction condition includes irradiation with ultraviolet light at 360 nm, or lowering a temperature to below 60°C.

In a third aspect, a recyclable sulfide composite solid electrolyte membrane is provided in the present disclosure. The recyclable sulfide composite solid electrolyte membrane includes a recyclable sulfide composite solid electrolyte according to the embodiments of the first aspect of the present disclosure or a recyclable sulfide composite solid electrolyte prepared by a method according to the embodiments of the second aspect of the present disclosure.

In a fourth aspect, a solid lithium-ion battery is provided in the present disclosure. The solid lithium-ion battery includes a positive electrode, a negative electrode, and a recyclable sulfide composite solid electrolyte membrane according to the embodiments of the third aspect of the present disclosure disposed between the positive electrode and the negative electrode.

A recyclable sulfide composite solid electrolyte provided according to an embodiment of the present disclosure includes a polymer having dynamic reversible covalent bonds, in which the polymer has the dynamic reversible covalent bonds integrated into a main chain or crosslinking branches, and a sulfide solid electrolyte. In the present disclosure, the recyclable sulfide composite solid electrolyte includes the polymer having the dynamic reversible covalent bonds, and the dynamic reversible covalent bonds exhibit strong binding properties and ion transport properties. By inducing the dynamic reversible covalent bonds to undergo a bonding reaction, the polymer polymerizes or crosslinks, allowing the sulfide composite solid electrolyte to bind together to form a membrane. By thermochemical or photochemical means, etc., the dynamic reversible covalent bonds undergo a debonding reaction, and the polymer degrades and loses its binding property, causing the sulfide composite solid electrolyte to lose its binder and degrade from a membrane into a powder, thus enabling recycling. Therefore, the sulfide composite electrolyte of the present disclosure can be recycled, has a certain self-healing capability, and has a prolonged service life.

In the embodiments of the present disclosure, the obtained recyclable sulfide composite solid electrolyte membrane exhibits good flexibility and self-healing capability, can be applied to flexible lithium-ion batteries, and has high safety and reliability.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.
FIG. 1 illustrates a self-healing process of a recyclable sulfide composite solid electrolyte according to an embodiment of the present disclosure.
FIG. 2 is a flow chart showing a method for preparing a recyclable sulfide composite solid electrolyte according to an embodiment of the present disclosure.
FIG. 3 is a flow chart showing a method for preparing a recyclable sulfide composite solid electrolyte membrane according to an embodiment of the present disclosure.
FIG. 4 illustrates ionic conductivity of an initial sulfide powder and a recyclable sulfide composite solid electrolyte membrane prepared according to an embodiment of the present disclosure at different temperatures.
FIG. 5 illustrates X-ray diffraction patterns of an initial sulfide powder and a recyclable sulfide composite solid electrolyte membrane according to an embodiment of the present disclosure.
FIG. 6 illustrates scanning electron microscopy images of Li₆PS₅Cl and a histogram of particle size distribution obtained using Nanomeasurements software according to an embodiment of the present disclosure.
FIG. 7 illustrates a scanning electron microscopy image of a cross-section of a recyclable sulfide composite solid electrolyte membrane prepared according to an embodiment of the present disclosure.
FIG. 8 illustrates ionic conductivity at different temperature ranges of a pristine membrane and a twice-recycled membrane of a recyclable sulfide composite solid electrolyte membrane prepared according to an embodiment of the present disclosure.
FIG. 9 illustrates a CV test plot of a battery prepared according to an embodiment of the present disclosure.
FIG. 10 illustrates a stress-strain curve of a recyclable sulfide composite solid electrolyte membrane prepared according to an embodiment of the present disclosure.
FIG. 11 illustrates a long cycle plot of an NCM811||sulfide composite solid electrolyte membrane||silicon negative electrode full cell according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects related to the present disclosure as recited in the appended claims. Unless specific conditions are specified in the examples, they are carried out under conventional conditions or conditions recommended by the manufacturer. Reagents or instruments without indicated manufacturers are all conventional products that are commercially available.

Chinese Patent Application No. 202010792060.7 provides a separable and recyclable sulfide-type solid electrolyte and its application. The sulfide-type solid electrolyte is a P-free Sn-based sulfide, with a general formula of LiₐSn_{b}A_{c}S_{d}, where A is a doping element that substitutes for Sn, selected from at least one of As, Sb, Bi, Si, W, or Mo, and 0<a≤4, 0≤b≤1, 0≤c≤0.3, and d=4. The above-mentioned sulfide-type solid electrolyte is soluble in water and methanol, and its crystal form remains unchanged after being dissolved and the solvent evaporated by heating, allowing recovery of the sulfide-type solid electrolyte.

Chinese Patent Application No. 202111205105.7 provides a method for preparing a polyethylene oxide solid electrolyte. It constructs a dynamic boronic ester cross-linked PEO network, which is physically mixed with a lithium salt and subsequently formed into a membrane. The resulting dynamic covalent bond cross-linked PEO solid electrolyte, which is self-healable, degradable, and recyclable, exhibits low polarization and good stability during cycling.

Chinese Patent Application No. 201811540502.8 provides a self-healing polymer electrolyte matrix and its preparation method, a self-healing polymer electrolyte, a lithium-ion battery, and its application. A self-healing polyurethane is obtained by a Diels-Alder reaction, and a reversible effect of a furan-maleimide structure in the self-healing polyurethane endows the self-healing polymer electrolyte matrix with good self-healing capability.

However, the recycling of sulfide solid electrolyte membrane has not been reported at the current stage, and therefore, it is of great significance to develop a recyclable sulfide solid electrolyte membrane.

As used herein, the term "alkyl group having 1 to 18 carbon atoms" refers to a linear or branched, saturated or unsaturated alkyl group having 1 to 18 carbon atoms. Specific examples of the alkyl group having 1 to 18 carbon atoms are methyl, ethyl, n-propyl, isopropyl, n-butyl, isobutyl, t-butyl, pentyl, ethylhexyl, hexyl, heptyl, n-octyl, nonyl, decyl, and dodecyl.

As used herein, the term "haloalkyl group having 1 to 18 carbon atoms" refers to a linear or branched, saturated or unsaturated haloalkyl group having 1 to 18 carbon atoms, where the haloalkyl group contains at least one halogen atom, such as fluorine, chlorine, bromine, or iodine atom. Specific examples of the haloalkyl group having 1 to 18 carbon atoms are trifluoromethyl, trichloromethyl, tribromomethyl, difluoroethyl, dichloroethyl, trifluoroethyl, trichloroethyl, tetrafluoroethyl, tetrachloroethyl, pentafluoroethyl, pentachloroethyl, hexafluoroethyl, hexachloroethyl, perfluoroethyl, difluoropropyl, dichloropropyl, trifluoropropyl, trichloropropyl, and perfluoropropyl.

As used herein, the term "cycloalkyl group" refers to a cycloalkyl group having 3 to 30 carbon atoms. The cycloalkyl group may be optionally substituted by one or more same or different groups, which, for example, are selected from halogen atoms such as fluorine, chlorine, bromine; hydroxyl groups; C₁-C₁₂ alkyl groups; C₁-C₁₂ alkoxy groups; and C₁-C₁₂ thioalkoxy groups. Specific examples of the cycloalkyl group are cyclopropyl, 2,2-difluorocyclopropyl, cyclobutyl, cyclopentyl, cyclohexyl, methylcyclohexyl, methoxycyclohexyl, and fluorocyclohexyl.

As used herein, the term "aryl group" refers to an aromatic carbocyclic group having 6 to 50 carbon atoms. The aryl group may be optionally substituted by one or more same or different groups, which, for example, are selected from halogen atoms such as fluorine, chlorine, bromine; hydroxyl groups; C₁-C₁₂ alkyl groups; C₁-C₁₂ alkoxy groups; and C₁-C₁₂ thioalkoxy groups. Specific examples of the aryl group are phenyl, methylphenyl, trimethylphenyl, methoxyphenyl, hydroxyphenyl, fluorophenyl, pentafluorophenyl, chlorophenyl, bromophenyl, nitrophenyl, dimethylaminophenyl, naphthyl, phenanthrene, and anthracene.

As used herein, the term "heteroaryl group" refers to an aromatic heterocyclic five- or six-membered group having 4 to 50 carbon atoms and 1 to 4 heteroatoms selected from nitrogen, oxygen, sulfur and silicon, as well as benzo-fused or heterobicyclic systems. The heteroaryl group may be optionally substituted by one or more same or different groups, which, for example, are selected from halogen atoms such as fluorine, chlorine, bromine; hydroxyl groups; C₁-C₁₂ alkyl groups; C₁-C₁₂ alkoxy groups; C₁-C₁₂ thioalkoxy groups. Specific examples of the heteroaryl group are pyridine, methylpyridine, methoxypyridine, phenylpyridine, fluoropyridine, pyrimidine, pyridazine, pyrazine, quinoline, furan, thiophene, hexylthiophene, bromothiophene, dibromothiophene, pyrrole, oxazole, thiazole, isoxazole, isothiazole, oxadiazole, thiadiazole, pyrazole, imidazole, indole, benzofuran, benzothiophene, benzoxazole, benzothiazole, benzoxadiazole, benzothiadiazole, benzopyrazole, and benzimidazole.

A recyclable sulfide composite solid electrolyte is provided in an embodiment of the present disclosure. The recyclable sulfide composite solid electrolyte includes a polymer having dynamic reversible covalent bonds, in which the polymer has the dynamic reversible covalent bonds integrated into a main chain or crosslinking branches, and a sulfide solid electrolyte.

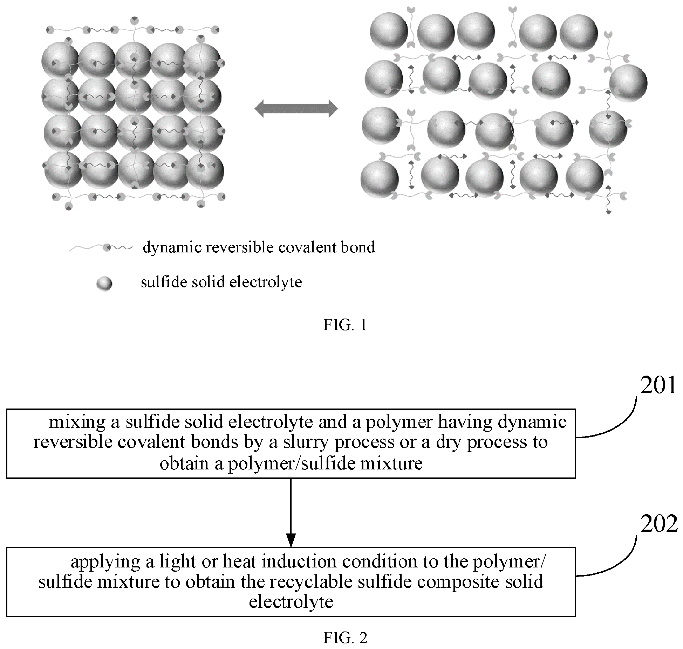

FIG. 1 illustrates a self-healing process of a recyclable sulfide composite solid electrolyte according to an embodiment of the present disclosure. Referring to a left part of FIG. 1, dynamic reversible covalent bonds in a polymer are bonded, and the polymer polymerizes or cross-links, allowing a sulfide composite solid electrolyte to bind together to form a membrane. Referring to a right part of FIG. 1, the dynamic reversible covalent bonds in the polymer undergo a debonding reaction, causing the polymer to degrade and lose its binding property. As the sulfide composite solid electrolyte loses its binder, it gradually degrades from a film state into a powder state. Thus, the sulfide composite electrolyte of the present disclosure has a self-healing capability and can be recycled, thus prolonging its service life.

In some embodiments, the main chain of the polymer is a flexible chain. For example, the main chain of the polymer may be one or more selected from natural rubbers, synthetic rubbers, polyurethanes, polyacrylates, polyphosphazenes, polyethylene oxide, epoxy resins, polyolefins, polydimethylsilane, or polycarbonates.

In some embodiments, the polymer includes one or more functional groups capable of repeatedly bonding/debonding under light or heat induction, for example, anthracene, cinnamate, coumarin, a combination of aldehydes and amines, a combination of furans and maleimides, and the like.

In some embodiments, the dynamic reversible covalent bonds include at least one selected from a covalent bond between coumarin molecules, a covalent bond between substituted or unsubstituted anthracene molecules, a covalent bond between substituted or unsubstituted furans and substituted or unsubstituted maleimides, a covalent bond between aldehydes and amines, and a covalent bond between substituted or unsubstituted cinnamate molecules.

In some embodiments, bonding and debonding reactions of the dynamic reversible covalent bonds include at least one of the following reactions (1) to (5).
(1) Bonding and debonding reactions between coumarin molecules, a reaction formula is as follows:

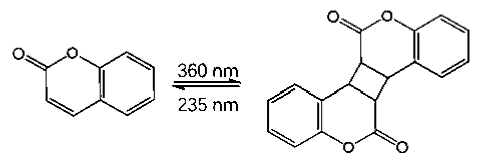

Coumarin molecules can undergo a bonding reaction induced by ultraviolet light at 360 nm, and can undergo a debonding reaction induced by ultraviolet light at 235 nm.

(2) Bonding and debonding reactions between substituted or unsubstituted anthracene molecules, a reaction formula is as follow: 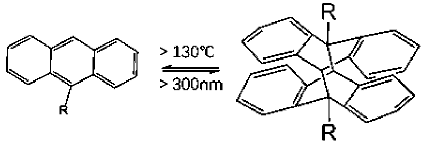 in which R is selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine. Optionally, R is selected from hydrogen, methyl, ethyl, n-propyl, or n-butyl. For example, R is selected from hydrogen, methyl, or ethyl. For example, R is hydrogen.

Optionally, bonding and debonding reactions between anthracene molecules have a reaction formula as follows:

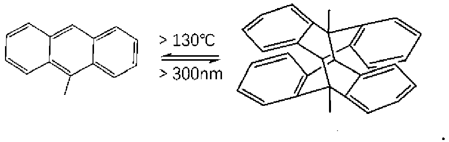

The anthracene molecules can undergo a bonding reaction under a condition such as irradiation with ultraviolet light at greater than 300 nm, optionally 360 nm, and can undergo a debonding reaction under a heating condition such as greater than 130°C, optionally 130 to 180°C, such as 140 to 170°C, such as 140°C.

(3) Bonding and debonding reactions between substituted or unsubstituted furans and substituted or unsubstituted maleimides, a reaction formula is as follows: 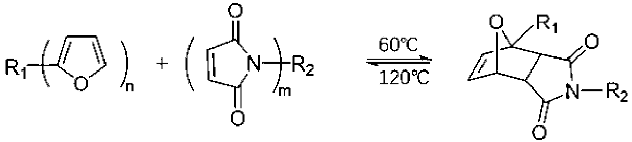 in which R₁ and R₂ are each independently selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms; in which the haloalkyl group contains at least one halogen atom, such as fluorine, chlorine, bromine, or iodine. Optionally, R₁ and R₂ are each independently selected from hydrogen, methyl, ethyl, n-propyl, or n-butyl. Optionally, R₁ and R₂ are each independently selected from hydrogen, methyl, or ethyl. For example, R₁ and R₂ are each independently hydrogen.

Optionally, bonding and debonding reactions between furans and maleimides have a reaction formula as follows: 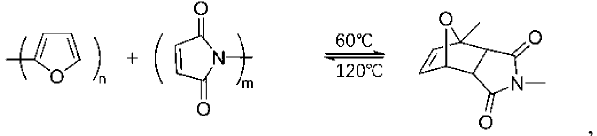 where each of n and m is an integer greater than or equal to 1. Optionally, each of n and m is an integer in the range of 1 to 1000. For example, each of n and m is an integer in the range of 10 to 500.

Furan and maleimide can undergo bonding and debonding reactions at different temperatures. For example, at a reaction temperature of 60°C, a bonding reaction occurs; at a reaction temperature of 120°C, a debonding reaction occurs.

(4) Bonding and debonding reactions between aldehydes and amines, a reaction formula is as follows: 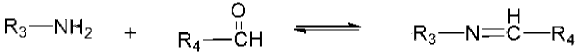 in which R₃ and R₄ are each independently selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine. Optionally, R₃ and R₄ are each independently selected from hydrogen, methyl, ethyl, n-propyl, or n-butyl. For example, R₃ and R₄ are each independently selected from hydrogen, methyl, or ethyl. For example, R₃ and R₄ are each independently hydrogen.

Optionally, bonding and debonding reactions between aldehydes and amines have a reaction formula as follows:

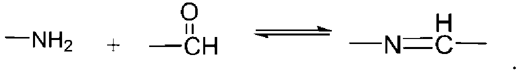

For example, aldehydes and amines can undergo debonding reactions at temperatures above 160°C, for example, at temperatures of 170 to 220°C, for example, at temperatures of 180 to 200°C. Aldehydes and amines can undergo bonding reactions during cooling, for example, at temperatures within the range of room temperature to 150°C, for example, at temperatures within the range of room temperature to 80°C. A reaction time and a reaction rate vary depending on properties of reactants.

(5) Bonding and debonding reactions between substituted or unsubstituted cinnamate molecules, a reaction formula is as follows: 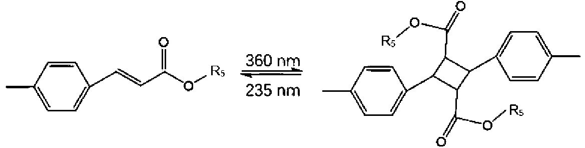 in which R₅ is selected from hydrogen; a halogen atom, such as fluorine, chlorine, bromine, or iodine; an alkyl group having 1 to 18 carbon atoms, such as 1 to 10 carbon atoms, such as 1 to 6 carbon atoms, such as 1 to 4 carbon atoms; or a haloalkyl group having 1 to 18 carbon atoms, such as 1 to 10 carbon atoms, such as 1 to 6 carbon atoms, such as 1 to 4 carbon atoms, in which the haloalkyl group contains at least one halogen atom, such as fluorine, chlorine, bromine, or iodine. Optionally, R₅ is selected from hydrogen, methyl, ethyl, n-propyl, or n-butyl. For example, R₅ is selected from hydrogen, methyl, or ethyl. For example, R₅ is hydrogen.

Optionally, bonding and debonding reaction between cinnamate molecules have a reaction formula as follows:

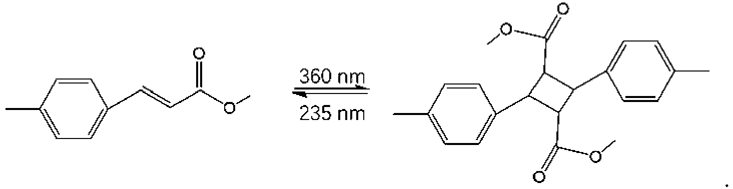

Cinnamate molecules can undergo a bonding reaction induced by ultraviolet light at 360 nm, and can undergo a debonding reaction induced by ultraviolet light at 235 nm.

Among the bonding and debonding reactions listed above, the induction conditions required for polymer degradation are mild, and film formation after recycling is convenient and rapid. A recycling method is simple and easy to implement, which is conducive to large-scale thinning of the electrolyte.

The functional groups involved in the above-mentioned bonding and debonding reactions may exist on chain segments, or may exist on polymer monomers.

In some embodiments, the dynamic reversible covalent bonds have strong binding properties. Thus, the polymer acts as a binder to assist in the film formation of the sulfide composite solid electrolyte.

In some embodiments, the dynamic reversible covalent bonds are used for ion transport. The dynamic reversible covalent bonds have a certain ion transport property, which can reduce internal resistance of batteries constituted by the sulfide composite solid electrolyte, further improving the cycling performance of the battery.

In some embodiments, the sulfide solid electrolyte is one or more selected from LiPSX, where X represents one or more of Cl, Br, or I; LiGPS; LiSnPS; or LiSiPS. The sulfide solid electrolyte in the present disclosure can be prepared according to conventional manners in the art.

The sulfide solid electrolyte may be of glass-ceramic type, thio-LISICON type, or argyrodite type. For example, the sulfide solid electrolyte may be one or more selected from Li₂S-P₂S₅, Li₂S-P₂S₅-MSₓ, Li_{3.4}Si_{0.4}P_{0.6}S₄, Li₁₀GeP₂S_{11.7}O_{0.3}, Li_{9.6}P₃S₁₂, Li₇P₃S₁₁, Li₉P₃S₉O₃, Li_{10.35}Si_{1.35}P_{1.65}S₁₂, Li_{9.81}Sn_{0.81}P_{2.19}S₁₂, Li₁₀GeP₂S₁₂, Li₆PS₅X, Li₇P₂S₈I, Li_{10.35}Ge_{1.35}P_{1.65}S₁₂, Li_{3.25}Ge_{0.25}P_{0.75}S₄, Li₁₀SnP₂S₁₂, Li₁₀SiP₂S₁₂, or Li_{9.54}Si_{1.74}P_{1.44}S_{11.7}Cl_{0.3}, where M includes one or a combination of two or more selected from Si, Ge, or Sn, and X is one or more selected from Cl, Br, or I, where 0≤x≤2.

In some embodiments, based on a total mass of the recyclable sulfide composite solid electrolyte, a mass percentage of the polymer is 0.2% to 40%, optionally 0.5% to 20%, for example, 1% to 10%. In some embodiments, based on the total mass of the recyclable sulfide composite solid electrolyte, a mass percentage of the sulfide solid electrolyte is 20% to 99.6%, optionally 60% to 99%, for example, 80% to 98%. In some embodiments, the recyclable sulfide composite solid electrolyte further includes a lithium salt, and a mass percentage of the lithium salt is 0.2% to 40%, optionally 0.5% to 20%, for example, 1% to 10%.

In some embodiments, the lithium salt is one or more selected from inorganic lithium salts or organic lithium salts. For example, the lithium salt is one or more selected from lithium perchlorate (LiClO₄), lithium tetrafluoroborate (LiBF₄), lithium hexafluoroarsenate (LiAsF₆), lithium hexafluorophosphate (LiPF₆), lithium bis(oxalato)borate (LiBOB), lithium difluoro(oxalato)borate (LiDFOB), lithium bis(fluorosulfonyl)imide (LiFSI), or lithium bis(trifluoromethanesulfonyl)imide (LiTFSI).

In some embodiments, the above-mentioned recyclable sulfide composite solid electrolyte further includes an additive. The additive can be used to improve physicochemical properties of the recyclable sulfide composite solid electrolyte. The additive may be an organic polymer material or an inorganic material. For example, the polymer material may be polyethylene, polytetrafluoroethylene, polyvinylidene fluoride, polyacrylonitrile, polyvinyl alcohol, polyvinylidene chloride, etc. The inorganic material may be silica, titanium dioxide, nickel oxide, silicon oxide, graphene, carbon nanotubes, kaolin, montmorillonite, etc.

In some embodiments, the above-mentioned recyclable sulfide composite solid electrolyte further includes a filler, for example, inorganic microparticles such as metal atom compounds AlOₓ, MgO, BiOₓ, etc., or oxides or sulfides such as SiOₓ, SiSₓ, POₓ, etc.

In the present disclosure, the recyclable sulfide composite solid electrolyte includes the polymer having the dynamic reversible covalent bonds, and the dynamic reversible covalent bonds exhibit strong binding properties and ion transport properties. By inducing the dynamic reversible covalent bonds to undergo a bonding reaction, the polymer polymerizes or crosslinks, allowing the sulfide composite solid electrolyte to bind together to form a membrane. By thermochemical or photochemical means, etc., the dynamic reversible covalent bonds undergo a debonding reaction, and the polymer degrades and loses its binding property, causing the sulfide composite solid electrolyte to lose its binder and degrade from a membrane into a powder, thus enabling recycling. Therefore, the sulfide composite electrolyte of the present disclosure has a self-healing capability, can be recycled, and has a prolonged service life.

An embodiment of the present disclosure further provides a method for preparing a recyclable sulfide composite solid electrolyte. Referring to FIG. 2, the method for preparing the recyclable sulfide composite solid electrolyte according to the present disclosure includes the following steps 201 to 202.

In step 201, a sulfide solid electrolyte and a polymer having dynamic reversible covalent bonds are mixed by a slurry process or a dry process to obtain a polymer/sulfide mixture.

In step 202, a light or heat induction condition is applied to the polymer/sulfide mixture to obtain the recyclable sulfide composite solid electrolyte.

In some embodiments, before step 201, the above method for preparing the recyclable sulfide composite solid electrolyte further includes fully grinding the sulfide solid electrolyte to obtain sulfide solid electrolyte particles having an average particle size in the range of 0.3 to 15 µm, optionally 0.5 to 10 µm, for example, 0.5 to 1.5 µm.

In some embodiments, a mixing manner employed in step 201 includes screw extrusion, agitation, gas stirring, ball milling, internal mixing, kneading, etc.

In some embodiments, the above method for preparing the recyclable sulfide composite solid electrolyte further includes adding a lithium salt. The lithium salt is mixed with the polymer/sulfide mixture by a slurry process or a dry process. The mixing manner for the lithium salt and the polymer/sulfide mixture includes screw extrusion, agitation, gas stirring, ball milling, internal mixing, kneading, etc.

In some embodiments, step 201 may include dissolving the polymer having the dynamic reversible covalent bonds in an organic solvent to obtain a polymer solution, uniformly mixing the polymer solution, the sulfide solid electrolyte, and the lithium salt to obtain a mixed slurry, and subjecting the mixed slurry to a drying treatment to obtain the recyclable sulfide composite solid electrolyte. The drying is carried out at a temperature of 60 to 120°C, optionally 75 to 95°C. The above organic solvent is one or more selected from toluene, xylene, hexane, cyclohexane, isobutanol, halogenated alkanes, ethyl acetate, isobutyl isobutyrate, ethylene carbonate, dimethyl carbonate, or acetonitrile.

In other embodiments, step 201 may include uniformly mixing the polymer having the dynamic reversible covalent bonds, the sulfide solid electrolyte, and the lithium salt to obtain the recyclable sulfide composite solid electrolyte.

In some embodiments, in step 202, under the light or heat induction condition, the bonding reaction of the dynamic reversible covalent bonds as described above is carried out to form the recyclable sulfide composite solid electrolyte. For example, the light or heat induction condition includes irradiation with ultraviolet light at 360 nm, or lowering a temperature to below 60°C.

An embodiment of the present disclosure further provides a recyclable sulfide composite solid electrolyte membrane. The recyclable sulfide composite solid electrolyte membrane includes a recyclable sulfide composite solid electrolyte according to the above embodiments of the present disclosure or a recyclable sulfide composite solid electrolyte prepared by a method according to the above embodiments of the present disclosure.

In some embodiments, a thickness of the recyclable sulfide composite solid electrolyte membrane is 2 to 60 µm, optionally 10 to 50 µm, for example, 20 to 35 µm.

In some embodiments, room-temperature ionic conductivity of the recyclable sulfide composite solid electrolyte membrane may be in the range of 0.5 to 6.0 mS·cm⁻¹, optionally in the range of 0.7 to 4.5 mS·cm⁻¹, for example, in the range of 1.0 to 3.0 mS·cm⁻¹.

In some embodiments, an oxidative decomposition voltage of the recyclable sulfide composite solid electrolyte membrane may be in the range of 4.0 to 10.0 V (vs. Li/Li⁺), optionally in the range of 4.5 to 8.5 V (vs. Li/Li⁺), for example, in the range of 5.0 to 8.0 V (vs. Li/Li⁺).

In some embodiments, a tensile strength of the recyclable sulfide composite solid electrolyte membrane is >300 kPa, optionally in the range of 0.4 to 20 MPa, for example, in the range of 0.7 to 10 MPa.

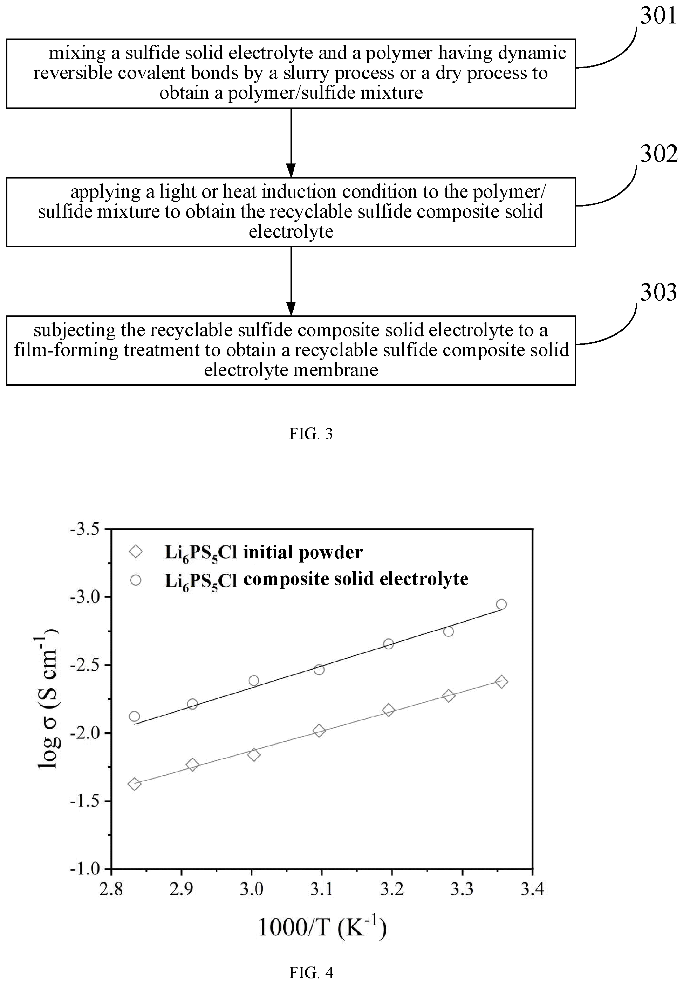

An embodiment of the present disclosure further provides a method for preparing a recyclable sulfide composite solid electrolyte membrane. Referring to FIG. 3, the method for preparing the recyclable sulfide composite solid electrolyte membrane according to the present disclosure includes the following steps 301 to 302.

In step 301, a sulfide solid electrolyte and a polymer having dynamic reversible covalent bonds are mixed by a slurry process or a dry process to obtain a polymer/sulfide mixture.

In step 302, a light or heat induction condition is applied to the polymer/sulfide mixture to obtain the recyclable sulfide composite solid electrolyte.

Operating procedures of step 301 and step 302 are respectively the same as those of the step 201 and step 202 described above, which will not be elaborated herein.

In step 303, the recyclable sulfide composite solid electrolyte is subjected to a film-forming treatment to obtain a recyclable sulfide composite solid electrolyte membrane.

In some embodiments, step 303 may include uniformly coating a mixed slurry onto a substrate, performing a drying treatment to obtain a sulfide composite solid electrolyte uniformly distributed on a surface of the substrate, and peeling the uniformly distributed sulfide composite solid electrolyte from the substrate to obtain the recyclable sulfide composite solid electrolyte membrane.

In other embodiments, step 303 may include rolling the polymer having the dynamic reversible covalent bonds, the sulfide solid electrolyte, and the lithium salt to obtain a sulfide composite solid electrolyte uniformly distributed on a surface of a substrate, and peeling the uniformly distributed sulfide composite solid electrolyte from the substrate to obtain the recyclable sulfide composite solid electrolyte membrane.

In some embodiments, a thickness of the recyclable sulfide composite solid electrolyte membrane is 2 to 60 µm, optionally 10 to 50 µm, for example, 20 to 35 µm.

In the above film-forming treatment, the polymer undergoes polymerization or cross-linking reaction, thus forming the sulfide composite solid electrolyte into a membrane. By means of a traditional slurry process, or a solvent-free/solvent-lean in-situ solidification process, it is applicable to various technical routes, can be rapidly industrialized, and has cost and environmental advantages.

In some embodiments, the substrate may be a polyethylene terephthalate film. In the present disclosure, the substrate can be selected according to actual needs, as long as it can provide a certain supporting effect, allowing the mixed slurry to form a film on the substrate.

In the embodiments of the present disclosure, the obtained recyclable sulfide composite solid electrolyte membrane has good flexibility and self-healing capability, can be applied to flexible lithium-ion batteries, and has high safety and reliability.

According to the method disclosed in the embodiments of the present disclosure, the recyclable sulfide composite solid electrolyte is prepared. Since the polymer having the dynamic reversible covalent bonds is used as a binder material and directly mixed with the sulfide solid electrolyte, a self-healing sulfide composite solid electrolyte membrane is obtained. This simplifies a preparation process of the recyclable sulfide composite solid electrolyte membrane, allows for easy and convenient operation, has a high yield, enables large-scale thinning of the electrolyte (<20 µm), and is conducive to improving energy density and safety.

The present disclosure provides a battery, optionally a solid lithium-ion battery, including a recyclable sulfide composite solid electrolyte according to the embodiments of the present disclosure. The recyclable sulfide composite solid electrolyte is disposed between a positive electrode and a negative electrode of the battery.

The positive electrode and the negative electrode of the battery can be selected according to actual needs. For example, an active material of the positive electrode includes at least one of lithium iron phosphate, lithium cobalt oxide, lithium manganese oxide, lithium vanadium phosphate, lithium nickel cobalt manganese oxide, or lithium nickel cobalt aluminum oxide. An active material of the negative electrode includes at least one of silicon, lithium metal, graphite, mesophase carbon fibers, mesocarbon microbeads, soft carbon, hard carbon, or silicon-carbon composite.

The battery provided in the present disclosure may be a monopolar all-solid-state battery, assembled by directly stacking the recyclable sulfide composite solid electrolyte membrane with positive and negative electrode sheets of the lithium-ion battery.

The battery provided in the present disclosure may also be a bipolar all-solid-state battery, assembled by directly stacking the recyclable sulfide composite solid electrolyte membrane with positive and negative electrode sheets of the lithium-ion battery.

The recyclable sulfide composite solid electrolyte membrane obtained in the present disclosure has relatively high flexibility and ionic conductivity, can be adapted to various electrode materials, and can be adapted to an existing stacking process, showing prospects for rapid industrialization.

### Example 1: Preparation of Recyclable Sulfide Composite Solid Electrolyte Membrane 1

980 mg of sulfide solid electrolyte Li₆PS₅Cl was thoroughly ground in a ball mill to obtain particles with an average particle size of 1 µm. 10 mg of vinyl coumarin was weighed out. The above sulfide solid electrolyte particles and coumarin were mixed, placed into a film-forming mold, cast into a film, and heated for polymerization. After curing, a sulfide composite solid electrolyte was obtained. After the mold was cooled to room temperature, it was irradiated with ultraviolet light at 360 nm until the composite electrolyte could be completely released from the mold, thus obtaining a recyclable sulfide composite solid electrolyte membrane.

FIG. 4 illustrates ionic conductivity of an initial sulfide powder and a recyclable sulfide composite solid electrolyte membrane prepared according to an embodiment of the present disclosure at different temperatures. As shown in FIG. 4, at the same temperature, the ionic conductivity of the recyclable sulfide composite solid electrolyte membrane prepared according to the embodiment of the present disclosure is higher than that of the initial sulfide powder.

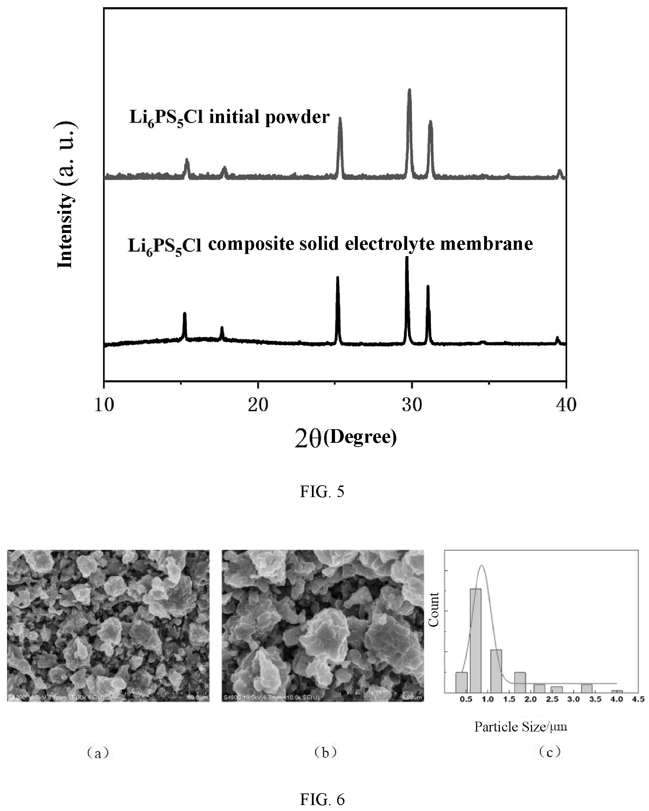

FIG. 5 illustrates X-ray diffraction patterns of an initial sulfide powder and a recyclable sulfide composite solid electrolyte membrane according to an embodiment of the present disclosure.

### Example 2: Preparation of Recyclable Sulfide Composite Solid Electrolyte Membrane 2

100 g of coumarin dipropanol was weighed out, and toluene was used as a solvent. The coumarin dipropanol was uniformly mixed with toluene diisocyanate at a molar ratio of 1:1.1. Dibutyltin dilaurate was used as an initiator, and polymerization was carried out at 60°C to obtain polyurethane with coumarin side groups. 980 mg of sulfide solid electrolyte Li₇P₃S₁₁ was thoroughly ground in a ball mill to obtain particles with an average particle size of 1 µm. 10 mg of the polyurethane substituted with coumarin side groups was dissolved in 50 mL of toluene and stirred until completely dissolved. The above sulfide solid electrolyte particles and the toluene solution of the polyurethane with coumarin side groups were mixed and stirred thoroughly until homogeneous to obtain a mixed solution. The mixed solution was poured into a mold and dried at 80°C for 6 h. The dried mold was irradiated with ultraviolet light at 360 nm until the composite electrolyte could be completely released from the mold, thus obtaining a recyclable sulfide composite solid electrolyte membrane.

### Example 3: Preparation of Recyclable Sulfide Composite Solid Electrolyte Membrane 3

980 mg of sulfide solid electrolyte Li₆PS₅Cl was thoroughly ground in a ball mill to obtain particles with an average particle size of 1 µm. 10 mg of butenyl anthracene was weighed out. The above sulfide solid electrolyte particles and butenyl anthracene were mixed uniformly in toluene as a solvent, placed into a film-forming mold, cast into a film, and heated for polymerization. After in-situ curing, a sulfide composite solid electrolyte was obtained. After the mold was cooled to room temperature, it was irradiated with ultraviolet light at 300 nm until the composite electrolyte could be completely released from the mold, thus obtaining a recyclable sulfide composite solid electrolyte membrane.

### Example 4: Preparation of Recyclable Sulfide Composite Solid Electrolyte Membrane 4

100 g of hexenyl anthracene was weighed out, and free radical polymerization was carried out in toluene as a solvent with azobisisobutyronitrile as an initiator at 60°C to obtain a hexene polymer with anthracene side groups. 980 mg of sulfide solid electrolyte Li₇P₃S₁₁ was thoroughly ground in a ball mill to obtain particles with an average particle size of 1 µm. 10 mg of the hexene polymer with anthracene side groups was dissolved in 50 mL of ethyl acetate and stirred until completely dissolved. The above sulfide solid electrolyte particles and the ethyl acetate solution of the hexene polymer with anthracene side groups were mixed and stirred thoroughly until homogeneous to obtain a mixed solution. The mixed solution was poured into a mold and dried at 80°C for 6 h. The dried mold was irradiated with ultraviolet light at 360 nm until the composite electrolyte could be completely released from the mold, thus obtaining a recyclable sulfide composite solid electrolyte membrane.

### Example 5: Preparation of Recyclable Sulfide Composite Solid Electrolyte Membrane 5

980 mg of sulfide solid electrolyte Li₆PS₅Cl was thoroughly ground in a ball mill to obtain particles with an average particle size of 1 µm. A total of 10 mg of vinyl furan and vinyl maleimide was weighed out at a molar ratio of 1:1. The above sulfide solid electrolyte particles, vinyl furan, and vinyl maleimide were mixed uniformly in petroleum ether as a solvent, placed into a film-forming mold, cast into a film, and heated at 60°C to simultaneously carry out polymerization and cross-linking reaction until the composite electrolyte could be completely released from the mold, thus obtaining a recyclable sulfide composite solid electrolyte membrane.

### Example 6: Preparation of Recyclable Sulfide Composite Solid Electrolyte Membrane 6

A total of 10 g of diaminoethyl furan and epoxidized soybean oil maleimide was weighed out at a molar ratio of 1:1. Using tetrahydrofuran as a solvent, polymerization was carried out by stirring at room temperature to obtain an epoxy resin with furan and maleimide side groups. 980 mg of sulfide solid electrolyte Li₇P₃S₁₁ was thoroughly ground in a ball mill to obtain particles with an average particle size of 1 µm. 10 mg of the epoxy resin was dissolved in 50 mL of toluene and stirred until completely dissolved. The above sulfide solid electrolyte particles and the toluene solution of the epoxy resin with furan and maleimide side groups were mixed and stirred thoroughly until homogeneous to obtain a mixed solution. The mixed solution was poured into a mold and dried at 60°C for 6 h until the composite electrolyte could be completely released from the mold, thus obtaining a recyclable sulfide composite solid electrolyte membrane.

### Example 7: Preparation of Recyclable Sulfide Composite Solid Electrolyte Membrane 7

980 mg of sulfide solid electrolyte Li₆PS₅Cl was thoroughly ground in a ball mill to obtain particles with an average particle size of 1 µm. A total of 10 mg of diethylamine and glutaraldehyde was weighed out at a molar ratio of 1:1. The above sulfide solid electrolyte particles, diethylamine, and glutaraldehyde were mixed uniformly in tetrahydrofuran as a solvent, placed into a film-forming mold, cast into a film, simultaneously heated to undergo polymerization, and then heated to 160°C and held at that temperature for 2 h, until the composite electrolyte could be completely released from the mold, thus obtaining a recyclable sulfide composite solid electrolyte membrane.

### Example 8: Preparation of Recyclable Sulfide Composite Solid Electrolyte Membrane 8

10 g of allyl aldehyde was weighed out. Using tetrahydrofuran as a solvent and azobisisobutyronitrile as an initiator, polymerization was carried out by stirring at 60°C to obtain an alkane with aldehyde side groups. 980 mg of sulfide solid electrolyte Li₇P₃S₁₁ was thoroughly ground in a ball mill to obtain particles with an average particle size of 1 µm. 5 mg of the alkane with aldehyde side groups and 5 mg of chitosan were dissolved in 50 mL of ethyl acetate and stirred until completely dissolved. The above sulfide solid electrolyte particles and the ethyl acetate solution containing the alkane with aldehyde side groups and chitosan were mixed and stirred thoroughly until homogeneous to obtain a mixed solution. The mixed solution was poured into a mold and dried at 50°C, and then heated to 160°C and held at that temperature for at least 2 h, until the composite electrolyte could be completely released from the mold, thus obtaining a recyclable sulfide composite solid electrolyte membrane.

### Example 9: Preparation of Recyclable Sulfide Composite Solid Electrolyte Membrane 9

980 mg of sulfide solid electrolyte Li₆PS₅Cl was thoroughly ground in a ball mill to obtain particles with an average particle size of 1 µm. 10 mg of hexenyl cinnamate was weighed out. Using tetrahydrofuran as a solvent, the above sulfide solid electrolyte particles and hexenyl cinnamate were placed into a film-forming mold, cast into a film, and simultaneously heated to undergo polymerization, followed by irradiation with ultraviolet light at 360 nm until the composite electrolyte could be completely released from the mold, thus obtaining a recyclable sulfide composite solid electrolyte membrane.

### Example 10: Preparation of Recyclable Sulfide Composite Solid Electrolyte Membrane 10

10 g of hexenyl cinnamate was weighed out. Using tetrahydrofuran as a solvent and azobisisobutyronitrile as an initiator, polymerization was carried out by stirring at 60°C to obtain polyhexene with cinnamate side groups. 980 mg of sulfide solid electrolyte Li₇P₃S₁₁ was thoroughly ground in a ball mill to obtain particles with an average particle size of 1 µm. 5 mg of the polyhexene with cinnamate side groups was dissolved in 50 mL of ethyl acetate and stirred until completely dissolved. The above sulfide solid electrolyte particles and the ethyl acetate solution of the polyhexene with cinnamate side groups were mixed and stirred thoroughly until homogeneous to obtain a mixed solution. The mixed solution was poured into a mold and dried at 50°C, and then irradiated with ultraviolet light at 360 nm until the composite electrolyte could be completely released from the mold, thus obtaining a recyclable sulfide composite solid electrolyte membrane.

### Performance Test

Test methods for performance parameters involved in the embodiments of the present disclosure are described below.

### 1. Average Particle Size

The particle size distribution of the sulfide solid electrolyte was analyzed using scanning electron microscopy and Nanomeasurements software. For example, scanning electron microscopy images of Li₆PS₅Cl are shown in FIG. 6(a) and FIG. 6(b). Analysis using Nanomeasurements software, as shown in FIG. 6(c), the particle size is mainly distributed between 0.5 and 1.5 µm, accounting for 86.7%, with D50 ≈ 0.77 µm.

### 2. Thickness

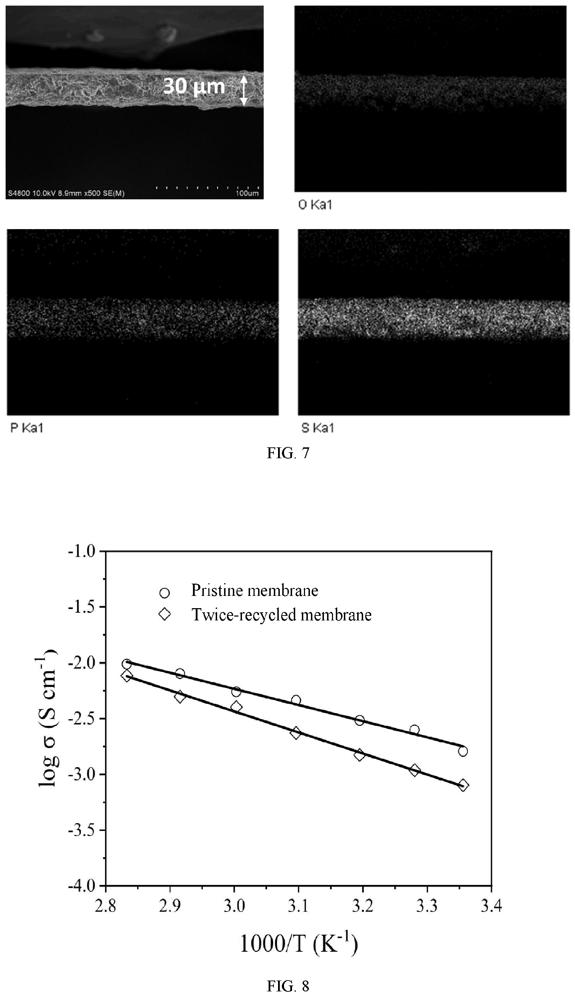

The thickness of the recyclable sulfide composite solid electrolyte membrane obtained in the examples of the present disclosure was measured by scanning electron microscopy of a cross-section of the membrane. For example, a scanning electron microscopy image of the recyclable sulfide composite solid electrolyte membrane obtained in Example 1 is shown in FIG. 7. The recyclable sulfide composite solid electrolyte membrane has a uniform thickness of approximately 30 µm. Energy dispersive spectroscopy was further used to characterize the distribution of polymer and sulfide within the membrane, where the oxygen element originates from the polymer, and the phosphorus and sulfur elements originate from the sulfide solid electrolyte, indicating very high uniformity.

### 3. Ionic Conductivity at Different Temperatures

Measurement was performed using an electrochemical impedance spectroscopy (EIS) instrument. The recyclable sulfide composite solid electrolyte membrane was assembled to a steel-steel symmetric battery, and frequency scanning was performed to measure the ionic conductivity at room temperature.

First, the prepared recyclable sulfide composite solid electrolyte membrane was assembled to a steel-steel symmetric battery, and frequency scanning was performed to measure the ionic conductivity, where an AC impedance spectrum was tested over a frequency range of 100 mHz to 7 MHz with a perturbation of 10 mV, and a corresponding impedance value was read. The ionic conductivity can be calculated according to a formula of *σ=L*/*RS*, where *L* represents the thickness of the recyclable sulfide composite solid electrolyte membrane, in cm; *R* represents the impedance of the recyclable sulfide composite solid electrolyte membrane, in Ω; *S* represents an area of the recyclable sulfide composite solid electrolyte membrane, in cm². Then, the binder in the electrolyte membrane was degraded, and the membrane was cut into pieces and re-formed into a film to simulate the recycling of the sulfide solid electrolyte membrane in an actual scenario. The secondary recycled sulfide solid electrolyte membrane was then assembled to a steel-steel symmetric battery, and frequency scanning was performed to measure the ionic conductivity. Measurements were performed from 30 to 80°C, with a test conducted every 10°C increase in temperature. For example, based on the testing of the recyclable sulfide composite solid electrolyte membrane according to Example 1, the results are shown in FIG. 8.

### 4. Oxidative Decomposition Voltage

A stainless steel||recyclable sulfide composite solid electrolyte membrane||metallic lithium cell was assembled for CV testing to characterize its electrochemical stability. The recyclable sulfide composite solid electrolyte membrane was subjected to a linear sweep voltammetry (LSV) test using a multi-channel electrochemical workstation (VMP-300). A current-voltage relationship of the recyclable sulfide composite solid electrolyte membrane was measured over a voltage range of 0 to 5.0 V at a scan rate of 1 mV/s. The current-voltage curve was analyzed to obtain a voltage value at which oxidative decomposition of the sulfide solid electrolyte membrane begins.

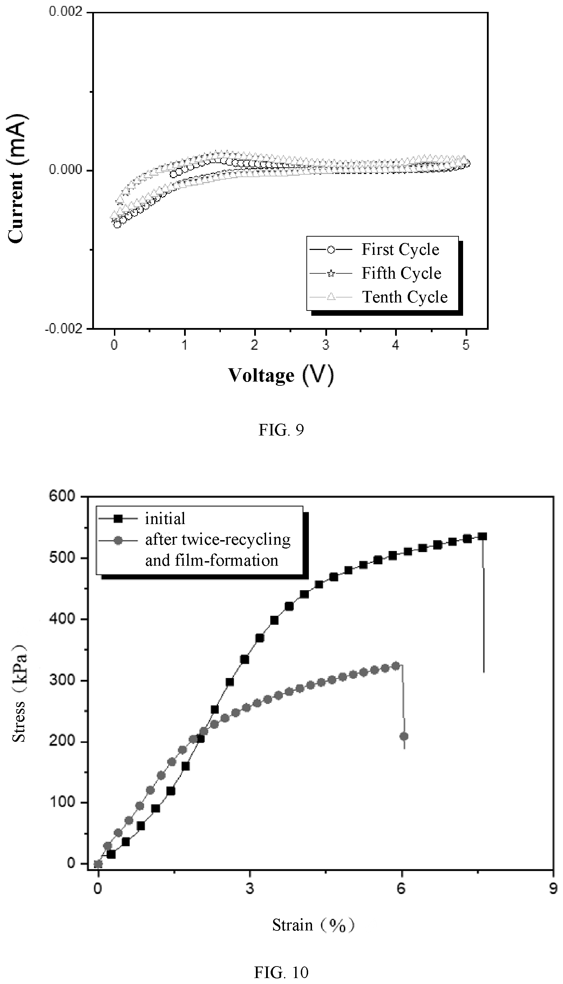

FIG. 9 shows a CV test curve of a full cell prepared from the recyclable sulfide composite solid electrolyte membrane according to Example 1. Through analysis, it can be seen that the recyclable sulfide composite solid electrolyte membrane obtained in Example 1 exhibits a response current of less than 0.2 µA at a high voltage of 5 V, indicating a very wide electrochemical window.

### 5. Tensile Strength

The sulfide solid electrolyte membrane was made into a uniform film with a length of 70 mm, a width of 10 mm and a thickness of 0.1 mm. The prepared film was clamped to a fixture of a universal testing machine (MTS E43.104), and a tensile force was applied to both ends of the sample using a universal tensile tester to obtain a stress-strain curve, to evaluate the tensile properties of the sulfide solid electrolyte membrane. An initial state of the recyclable sulfide composite solid electrolyte membrane in Example 1 and the recycled sulfide composite solid electrolyte membrane were measured, respectively, and the results are shown in FIG. 10 below.

As shown in FIG. 10, although a mechanical strength of the membrane decreases after secondary processing, it can still maintain a tensile strength of >300 kPa, meeting lamination requirements in modern battery manufacturing and showing potential for reassembling batteries.

Physicochemical properties of the recyclable sulfide composite solid electrolyte membranes of Examples 1 to 10 were tested, and results are shown in Table 1.

**Table 1. Chemical composition and physicochemical properties of the recyclable sulfide composite solid electrolyte membranes of Examples 1 to 10**

| Item | Physicochemical Properties | | | |
|---|---|---|---|---|
| | Thickness (µm) | Ionic Conductivity at Room Temperature (mS·cm⁻¹) | Oxidative Decomposition Voltage (V vs. Li/Li⁺) | Tensile Strength (MPa) |
| Example 1 | 30 | 1.1 | 4.7 | 0.6 |
| Example 2 | 30 | 1 | 4.8 | 1.3 |
| Example 3 | 30 | 0.7 | 5.0 | 2.5 |
| Example 4 | 33 | 1.1 | 4.7 | 3.2 |
| Example 5 | 34 | 1 | 4.9 | 0.6 |
| Example 6 | 31 | 0.7 | 5.0 | 1.3 |
| Example 7 | 30 | 1.1 | 4.7 | 2.5 |
| Example 8 | 30 | 1.3 | 4.6 | 1.2 |
| Example 9 | 33 | 0.7 | 5.0 | 0.8 |
| Example 10 | 31 | 0.9 | 4.9 | 0.9 |

### Preparation of Full Cell

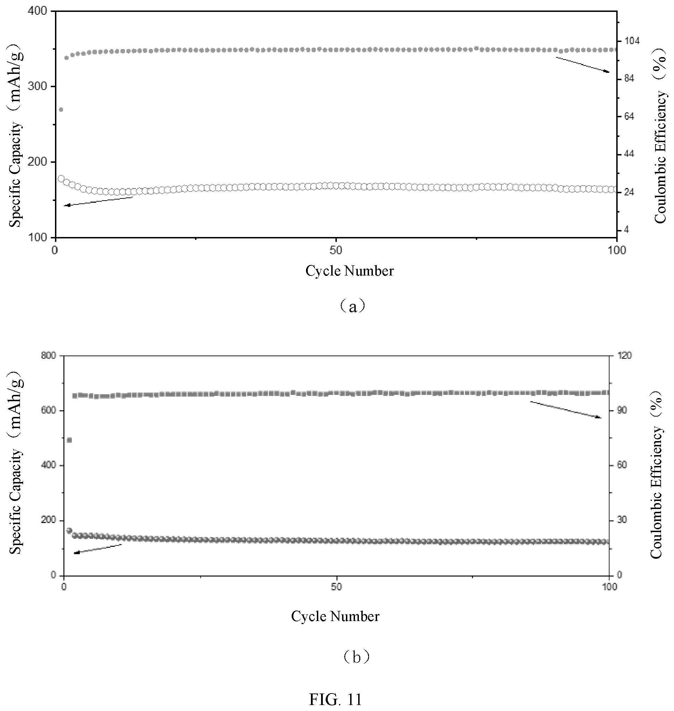

LiNiCoMnO₄ (NCM811) was used as a positive electrode material of a battery, and silicon was used as a negative electrode material. They were stacked with the recyclable sulfide composite solid electrolyte membrane obtained in Example 1 of the present disclosure to assemble an NCM811||sulfide composite solid electrolyte membrane||silicon negative electrode full cell. A long cycle plot of the obtained full cell is shown in FIG. 11(a). As shown in FIG. 11(a), charge-discharge tests were performed at a rate of 0.2C within a voltage range of 2.7 to 4.2 V (vs. Li⁺/Li). The NCM811||sulfide composite solid electrolyte membrane||silicon negative electrode full cell exhibited a capacity retention rate of 99% after 100 cycles.

The sulfide composite solid electrolyte membrane obtained in Example 1 of the present disclosure was recycled to obtain a recycled sulfide composite solid electrolyte membrane. This recycled sulfide composite solid electrolyte membrane was assembled to an NCM811||recycled sulfide composite solid electrolyte membrane||silicon negative electrode full cell according to the above steps. A long cycle plot of the obtained full cell is shown in FIG. 11(b). As shown in FIG. 11(b), charge-discharge tests were performed at a rate of 0.2C within a voltage range of 2.7 to 4.3 V (vs. Li⁺/Li). The NCM811||sulfide composite solid electrolyte membrane||silicon negative electrode full cell exhibited a capacity retention rate of 99% after 100 cycles.

The recyclable sulfide composite solid electrolyte membrane provided in the example of the present disclosure can be recycled, has a certain self-healing capability, and can be applied to full cells. Thus, the recycling of batteries is achieved, reducing carbon emissions of the batteries.

Other embodiments of the present disclosure will be apparent to those skilled in the art from consideration of the specification and practice of the present disclosure described here. The present disclosure is intended to cover any variations, uses, or adaptations of the present disclosure following the general principles thereof and such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure merely be limited by the appended claims.

## Claims

1. A recyclable sulfide composite solid electrolyte, comprising:
a polymer having dynamic reversible covalent bonds, wherein the polymer has the dynamic reversible covalent bonds integrated into a main chain or crosslinking branches; and
a sulfide solid electrolyte.

2. The recyclable sulfide composite solid electrolyte of claim 1, wherein the main chain of the polymer having the dynamic reversible covalent bonds is a flexible chain.

3. The recyclable sulfide composite solid electrolyte of claim 2, wherein the main chain of the polymer having the dynamic reversible covalent bonds is one or more selected from natural rubbers, synthetic rubbers, polyurethanes, polyacrylates, polyphosphazenes, polyethylene oxide, epoxy resins, polyolefins, polydimethylsilane, or polycarbonates.

4. The recyclable sulfide composite solid electrolyte of any one of claims 1 to 3, wherein the polymer comprises one or more functional groups capable of repeatedly bonding/debonding under light or heat induction.

5. The recyclable sulfide composite solid electrolyte of claim 4, wherein bonding and debonding reactions of the dynamic reversible covalent bonds comprise at least one of:
i) bonding and debonding reactions between coumarin molecules: 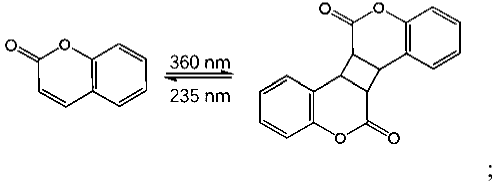
ii) bonding and debonding reactions between substituted or unsubstituted anthracene molecules: 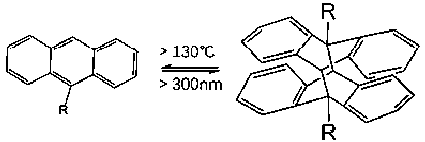 wherein R is selected from hydrogen; a halogen atom; an alkyl group having 1 to 18 carbon atoms; or a haloalkyl group having 1 to 18 carbon atoms, wherein the haloalkyl group contains at least one halogen atom;
iii) bonding and debonding reactions between substituted or unsubstituted furans and substituted or unsubstituted maleimides: 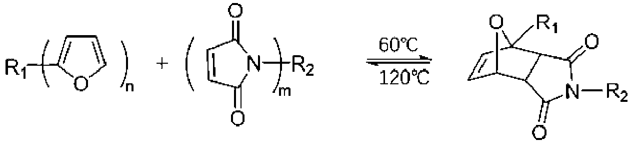
wherein R₁ and R₂ are each independently selected from hydrogen; a halogen atom; an alkyl group having 1 to 18 carbon atoms; or a haloalkyl group having 1 to 18 carbon atoms, wherein the haloalkyl group contains at least one halogen atom;
each of n and m is an integer greater than or equal to 1;
iv) bonding and debonding reactions between aldehydes and amines: 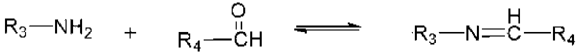 wherein R₃ and R₄ are each independently selected from hydrogen; a halogen atom; an alkyl group having 1 to 18 carbon atoms; a haloalkyl group having 1 to 18 carbon atoms, wherein the haloalkyl group contains at least one halogen atom; a cycloalkyl group; an aryl group; or a heteroaryl group;
v) bonding and debonding reactions between substituted or unsubstituted cinnamate molecules: 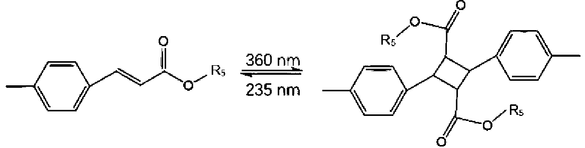 wherein R₅ is selected from hydrogen; a halogen atom; an alkyl group having 1 to 18 carbon atoms; or a haloalkyl group having 1 to 18 carbon atoms, wherein the haloalkyl group contains at least one halogen atom.

6. The recyclable sulfide composite solid electrolyte of claim 5, wherein the halogen atom is selected from fluorine, chlorine, bromine, or iodine; R is selected from hydrogen, methyl, ethyl, n-propyl, or n-butyl; R₁ and R₂ are each independently selected from hydrogen, methyl, ethyl, n-propyl, or n-butyl; R₃ and R₄ are each independently selected from hydrogen, methyl, ethyl, n-propyl, or n-butyl; and R₅ is selected from hydrogen, methyl, ethyl, n-propyl, or n-butyl.

7. The recyclable sulfide composite solid electrolyte of any one of claims 1 to 3, wherein the sulfide solid electrolyte is one or more selected from Li₂S-P₂S₅, Li₂S-P₂S₅-MSₓ, Li_{3.4}Si_{0.4}P_{0.6}S₄, Li₁₀GeP₂S_{11.7}O_{0.3}, Li_{9.6}P₃S₁₂, Li₇P₃S₁₁, Li₉P₃S₉O₃, Li_{10.35}Si_{1.35}P_{1.65}S₁₂, Li_{9.81}Sn_{0.81}P_{2.19}S₁₂, Li₁₀GeP₂S₁₂, Li₆PS₅X, Li₇P₂S₈I, Li_{10.35}Ge_{1.35}P_{1.65}S₁₂, Li_{3.25}Ge_{0.25}P_{0.75}S₄, Li₁₀SnP₂S₁₂, Li₁₀SiP₂S₁₂, or Li_{9.54}Si_{1.74}P_{1.44}S_{11.7}Cl_{0.3}; wherein M comprises one or a combination of two or more selected from Si, Ge, or Sn; and X is one or more selected from Cl, Br, or I; where 0≤x≤2.

8. The recyclable sulfide composite solid electrolyte of any one of claims 1 to 3, wherein the recyclable sulfide composite solid electrolyte further comprises a lithium salt; and
wherein a mass percentage of the polymer is 0.2% to 40%, a mass percentage of the sulfide solid electrolyte is 20% to 99.6%, and a mass percentage of the lithium salt is 0.2% to 40%, based on a total mass of the recyclable sulfide composite solid electrolyte.

9. The recyclable sulfide composite solid electrolyte of claim 8, wherein the lithium salt is one or more selected from lithium perchlorate (LiClO₄), lithium tetrafluoroborate (LiBF₄), lithium hexafluoroarsenate (LiAsF₆), lithium hexafluorophosphate (LiPF₆), lithium bis(oxalato)borate (LiBOB), lithium difluoro(oxalato)borate (LiDFOB), lithium bis(fluorosulfonyl)imide (LiFSI), or lithium bis(trifluoromethanesulfonyl)imide (LiTFSI).

10. A method for preparing a recyclable sulfide composite solid electrolyte according to any one of claims 1 to 9, comprising:
mixing a sulfide solid electrolyte and a polymer having dynamic reversible covalent bonds by a slurry process or a dry process to obtain a polymer/sulfide mixture; and
applying a light or heat induction condition to the polymer/sulfide mixture to obtain the recyclable sulfide composite solid electrolyte.

11. The method of claim 10, wherein the method further comprises:
adding a lithium salt, wherein the lithium salt is mixed with the polymer/sulfide mixture by at least one of screw extrusion, agitation, gas stirring, ball milling, internal mixing, or kneading.

12. The method of claim 10 or 11, wherein the light or heat induction condition comprises: irradiation with ultraviolet light at 360 nm, or lowering a temperature to below 60°C.

13. A recyclable sulfide composite solid electrolyte membrane, comprising a recyclable sulfide composite solid electrolyte according to any one of claims 1 to 9 or a recyclable sulfide composite solid electrolyte prepared by a method according to any one of claims 10 to 12.

14. A solid lithium-ion battery, comprising:
a positive electrode;
a negative electrode; and
a recyclable sulfide composite solid electrolyte membrane according to claim 13 disposed between the positive electrode and the negative electrode.
